# EUROPÄISCHE PATENTANMELDUNG

(11) **EP 4 803 415 A1**
(43) Veröffentlichungstag der Anmeldung: **09.09.2026**
(21) Anmeldenummer: 26159036.8
(22) Anmeldetag: 17.02.2026
(51) Int. Cl.: B64C 3/56

(54) **BETÄTIGUNGSMECHANISMUS FÜR KLAPPBARE FLÜGEL**

(30) Priorität: 06.03.2025 DE 102025108486
(71) Anmelder: Liebherr-Aerospace Lindenberg GmbH, 88161 Lindenberg (DE)
(72) Erfinder: GAILE, Anton, 88299 Leutkirch (DE)
(74) Vertreter: Lorenz Seidler Gossel Part. mbB

(57) **Zusammenfassung**

Die vorliegende Erfindung betrifft eine Vorrichtung zur Betätigung eines klappbaren Flugzeugfllügels, mit einem Drehantrieb, welcher ortsfest in einem festen Teil des Flügels angebracht ist und mit einem Ausgangshebel gekoppelt ist, einem Zwischenhebel, welcher zum einen drehbar mit dem Ausgangshebel des Drehantriebs und zum anderen drehbar mit einem beweglichen Teil des Flügels verbunden ist, und einer drehbaren Verbindung zwischen dem festen und beweglichen Teil des Flügels, wobei der Drehantrieb einen größeren Drehwinkel aufweist als der Flügel selbst. Die vorliegende Erfindung bietet somit ein kostengünstige und verlässliche Ausgestaltung eines betätigungsmechanismus für klappbare Flugzeugflügel.

## Beschreibung

Die vorliegende Erfindung betrifft einen Betätigungsmechanismus für klappbare Flügel eines Luftfahrzeugs.

Klappbare Flugzeugflügel dienen dazu, die Flügel der Flieger möglichst kompakt zusammen zu falten, um den Platzbedarf der Flieger am Gate, im Hangar oder auf einem Träger auf ein Minimum zu reduzieren. Beispielsweise können die Flügel um 90° nach oben geklappt werden.

Bei herkömmlichen Flugzeugen mit klappbaren Flügeln wird ein jeder Flügel beispielweise mittels eines Drehantriebes hochgeklappt, wobei der Drehantrieb über ein Wellensystem und ein Winkelgetriebe mit einer redundanten, hydraulischen Antriebseinheit verbunden ist.

Die hydraulische Steuerung dieser Antriebseinheit erfolgt wieder über zwei Ventilblöcke, welche wiederum von übergeordneten elektronischen Steuereinheiten geregelt werden.

Um den Flügel in der oberen Stellung zu halten, sind bei dieser herkömmlichen Lösung in der Antriebseinheit Bremsen eingebaut und um eine Überlast beim Klemmen des Systems zu vermeiden, sind die Antriebseinheiten mit einer Überlasteinrichtung ausgestattet. Das bedeutet, das System ist komplex, schwer und teuer.

Der vorliegenden Erfindung liegt vor diesem Hintergrund die Aufgabe zugrunde, die Nachteile des Stands der Technik abzumildern oder gar ganz zu beseitigen.

Insbesondere liegt der vorliegenden Erfindung die spezifische Aufgabe zugrunde, eine einfache, kostengünstige und zuverlässige Möglichkeit zum Betätigen der klappbaren Flügel zu schaffen.

In anderen Worten geht es bei der Erfindung, einen möglichst einfachen, platzsparenden, leichten, betriebssicheren und kostengünstigen Betätigungsmechanismus für einen klappbaren Flügel zu finden.

Diese Aufgabe wird durch eine Vorrichtung mit den Merkmalen des Anspruchs 1 sowie die weiteren Gegenstände der unabhängigen Ansprüche gelöst. Vorteilhafte Ausführungsformen der Erfindung sind Gegenstand der Unteransprüche.

Demnach ist eine Vorrichtung zur Betätigung eines klappbaren Flügels vorgesehen, mit:
- einem Drehantrieb, welcher ortsfest in einem festen Teil des Flügels angebracht ist und mit einem Ausgangshebel gekoppelt ist,
- einem Zwischenhebel, welcher zum einen drehbar mit dem Ausgangshebel des Drehantriebs und zum anderen drehbar mit einem beweglichen Teil des Flügels verbunden ist, und
- einer drehbaren Verbindung zwischen dem festen und beweglichen Teil des Flügels, wobei
- der Drehantrieb einen größeren Drehwinkel aufweist als der Flügel selbst.

Die vorliegende Erfindung ermöglicht es auf einfache, platzsparende und kostengünstige Weise, einen Flügel mit geringer Bauhöhe (Thin Wing) um 90° nach oben zu Klappen.

Eine erfindungsgemäße Vorrichtung weist vorzugsweise einen Drehantrieb (kann auch als Rotationsantrieb bezeichnet werden) in Kombination mit einer 4-Gelenk-Kinematik auf.

Durch eine bewusste Wahl der Hebellängen und der Anlenkpunkte ergibt sich ein Betätigungsmechanismus, welcher zum einen bis zu 50% weniger Drehmoment benötigt im Vergleich zu herkömmlichen Systemen, als auch den Vorteil bietet, dass sowohl die ausgeklappte (auch als "Wing down"-Position bezeichnet) als auch die hochgeklappte Position (auch als "Wing up"-Position bezeichnet) des Flügels ohne zusätzliche Bremsen sicher gehalten werden kann.

Der Antrieb einer erfindungsgemäßen Vorrichtung kann entweder über einen hydraulikantrieb oder einen elektrischen Antrieb erfolgen.

Eine erfindungsgemäße Vorrichtung ist vorzugsweise so ausgestaltet, dass wenn sich der Flügel in einer hochgeklappten Position befindet, sich der Ausgangshebel des Drehantriebs und der Zwischenhebel in einer Linie befinden, sodass der Flügel passiv in der hochgeklappten Position gehalten wird.

Unter passiv ist hierbei zu verstehen, dass keine aktive Kraft, beispielsweise mittels einer Bremse oder einem Arretierungsmechanismus, aufgebracht werden muss, um den Flügel in der hochgeklappten Position zu halten.

Durch die erfindungsgemäße Vorrichtung wird der Flügel vielmehr so austariert, dass er gleichsam von allein in der gewünschten Position verbleibt.

In anderen Worten ist bei einer erfindungsgemäßen Vorrichtung vorzugsweise die Kinematik so ausgeführt, dass sich bei der "Wing up"-Position der Hebel des Drehantriebs und der Zwischenhebel in einer Linie befinden, bzw. leicht überzentriert (auch als "übercentert" bezeichnet) sind, so dass diese Position grundsätzlich ohne zusätzliche Bremsen am Drehantrieb oder anderer Verriegelungsmechanismen gehalten werden kann.

Selbstverständlich kann dennoch eine Sicherung oder ein Verriegelungsmechanismus vorhanden sein, welche den Flügel in der gewünschten Position sichert.

Eine erfindungsgemäße Vorrichtung ist vorzugsweise so ausgestaltet, dass wenn sich der Flügel in einer ausgeklappten Position befindet, sich der Ausgangshebel des Drehantriebs und der Zwischenhebel in einer parallelen Anordnung zueinander befinden, sodass der Flügel passiv in der ausgeklappten Position gehalten wird bzw. nur minimale Kräfte/Drehmomente benötigt werden, um den Flügel in dieser Positon zu halten.

In anderen Worten ist bei einer erfindungsgemäßen Vorrichtung vorzugsweise die Kinematik so ausgeführt, dass sich bei der "Wing down"-Position der Hebel des Drehantriebs und der Zwischenhebel in einer parallelen Anordnung befinden, und / oder leicht überzentriert sind, so dass diese Position theoretisch ohne zusätzliche Bremsen am Drehantrieb oder anderer Verriegelungsmechanismen gehalten werden kann.

Unter "übercenterung" oder "Überzentrierung" versteht man dabei, dass der Drehantrieb minimal über die paralelle Positon hinaus, gegen einen festen Anschlag fährt. Das bedeutet, auftretende Zugkräfte führen dazu, dass es den Drehantrieb weiter Richtung Anschlag drehen will. Das bedeutet, dass auftretende Zugkräfte zu 100% vom Endanschlag augenommen werden, ohne dass dadurch der Drehantrieb belastet wird, bzw. Drehmoment aufbringen muss.

Weiterhin kann ein Verriegelungsmechanismus vorhanden sein, der dazu ausgelegt ist, den Flügel in der ausgeklappten Position zu arretieren, wobei der Verriegelungsmechanismus vorzugsweise an einem Verbindungspunkt des Zwischenhebels mit dem Ausgangshebel des Drehantriebs angreift.

In anderen Worten kann der Verriegelungsmechanismus für die "Wing down"-Position am Verbindungspunkt des Zwischenhebels mit dem Ausgangshebel des Drehantriebs angreifen.

Der Verriegelungsmechanismus kann als Bremse am Drehantrieb und / oder an einer Drehachse des Drehantriebs angebracht oder ausgestaltet sein. Aufgrund der Übercenterung in Wing down Position benötigt der Verrriegelungsmechanismus auch nur sehr geringe Kräfte, da ja die auftretenden Zugkräfte vom mechanischen Endanschlag aufgenommen werden. Die Verrieglung muss lediglich sicherstellen, dass der Drehantrieb nicht aufgrund von Massenkräften (Vibration, Schock) aus der Übercenterten Stellung heraus gedrückt wird. Das selbe gilt natürlich auch für die Wing up Positon.

Der Drehantrieb kann als Getriebe, vorzugsweise als Wolfram-Getriebe, ausgeführt sein.

Das Getriebe kann durch einen Hydraulikmotor oder einen Elektromotor antreibbar oder angetrieben sein.

Der Hydraulikmotor kann von einem benachbart oder in der Nähe angeordneten Elektro-Hydraulischen Aktuator (EHA) versorgt/angesteuert werden.

Dies spart Geweicht und Kosten durch eine Mehrfachnutzung der Elektronikbauteile, wie nachstehend erläutert:
Ist ein hydraulischer Antrieb vorgesehen und es befindet sich ein Elektrohydraulischer (Flugsteuerungs-)Aktuator (EHA) in räumlicher Nähe, kann dessen Elektrische- und Hydrostatische Steuerung dazu genutzt werden, am Boden (also nicht während des Fluges, denn dann dient der EHA der Flugsteuerung) den Hydraulikmotor für das Flügelklappsystem zu versorgen und zu steuern.

Im Flug dient dieselbe Steuerung/Regelung bzw. derselbe EHA dann zur Fluglageregelung oder einem anderen Zweck (z.B. zum Verfahren der Landeklappen).

Auch im Falle eines Elektromotors kann dieser vorzugsweise von einer Elektronik (z.B. einem EHA) angesteuert werden, welche im Flug eine andere Aufgabe wahrnimmt.

Der Elektromotor kann beispielsweise von einer Elektronik angesteuert werden, welche dazu ausgelegt ist, im Flug alternativ oder zusätzlich eine andere Aufgabe, vorzugsweise eine Aufgabe bei der Steuerung des Luftfahrzeugs, zu erfüllen.

Ist also ein Elektromotor vorgesehen, kann auch hier eine vorhandene Elektronikeinheit (z.B. eine Leistungs- und /oder Kontrollelektronik), welche im Flug benötigt wird um z.B. eine Flugsteuerungsfläche, eine Landeklappe oder eine Spoilerklappe zu betätigen, dazu genutzt werden, um am Boden den Flügelklappmechanismus zu betätigen.

Auf eine designierte, separate Elektronik nur zum Steuern der erfindungsgemäßen Vorrichtung, bzw. deren Drehantriebs, kann somit vorzugsweise sowohl bei einem Hydraulikmotor als auch einem Elektromotor verzichtet werden.

Weiterhin kann eine Steuereinheit vorhanden sein, welche dazu ausgelegt ist, in einer ausgeklappten Position des Flügels, einen Antrieb des Drehantriebs im Flug dazu anzusteuern, im Fall von Böen oder anderen Störungen einen beweglichen Teil des Flügels freizugeben und / oder aktiv abzuklappen, um die Auswirkung der Störung zu minimieren.

In anderen Worten wird vorzugsweise durch die Steuereinheit in der "Wing down"-Position, der Antrieb des Drehantriebs im Flug dahingehend angesteuert, um im Fall von Böen oder anderen Störungen einen beweglichen Teil des Flügels freizugeben, bzw. diesen aktiv abzuklappen, um die Auswirkung der Störung zu minimieren.

Der Drehantrieb kann einen redundanten Antrieb aufweisen.

Die Kinematik einer erfindungsgemäßen Vorrichtung ist vorzugswiese derart ausgestaltet, dass sie in der "Wing down"-Position nicht überzentriert bzw. "übercentert" ist.

Der Drehantrieb kann neben dem Hauptantrieb einen Notantrieb besitzen, welcher im Fehlerfall den Drehantrieb mit reduzierter Geschwindigkeit bewegen bzw. betreiben kann.

Der Notantrieb kann ein elektrischer Antrieb mit 28VDC-Versorgung sein.

Die hier vorgestellte Erfindung ermöglicht eine einfachere, leichtere und kostengünstigere Lösung für das Klappen eines Flügels eines Luftfahrzeugs, z.B. eines Flugzeugs.

Weiterhin ergeben sich ergeben sich folgende Vorteile durch die vorliegende Erfindung:
Der Betätigungsmechanismus ist kein Strukturteil, sondern nur ein Systemteil, wodurch sich die Kosten hierfür reduzieren.

Durch die Ausgestaltung des Betätigungsmechanismus reduziert sich das notwendige Betätigungsmoment um bis zu 50%.

Durch die spezielle Anordnung kann sowohl die Wing-up als auch die Wing-down Position durch überknien der Hebel-Anordnung theoretisch ohne zusätzliche Bremsen fixiert werden.

Selbstverständlich macht es aus Sicherheitsgründen dennoch Sinn, Bremsen bzw. einen Verriegelungsmechanismus mit geringer Haltekraft zu installieren, um auch unter Vibrationsbedingungen die Positonen sicher zu halten.

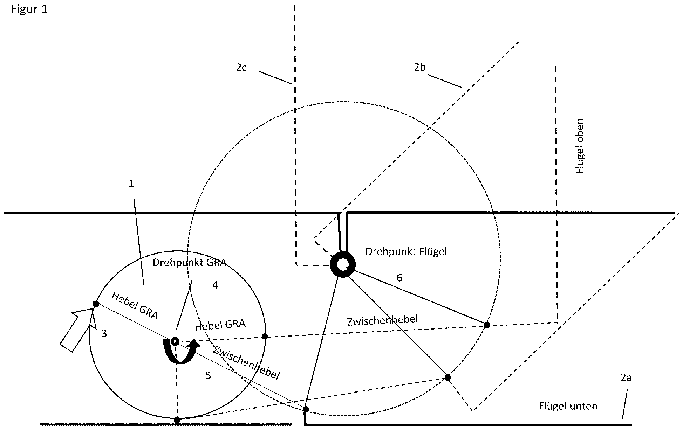

Wenn der Verriegelungsmechanismus für die Wing-down-Position an den Betätigungshebeln angreift (Position siehe weißer Pfeil in Fig. 1), sieht dieser im Betrieb keine Last, wodurch dieser sehr klein, leicht und auch einfach ausgeführt werden kann.

Die Betätigung der Kinematik ist mittels eines einfachen, bewährten, betriebssicheren Rotationsantriebs möglich.

Da der Betätigungsmechanismus sehr kurz baut, bleibt im Flügel genügend Platz, um weitere Verbindungen zwischen dem festen und beweglichen Teil des Flügels zu integrieren.

Der Betätigungsmechanismus ist sehr simpel aufgebaut und ist damit wenig störungsanfällig.

Der Betätigungsmechanismus kann auf einfache Art mit einer Backup Betätigung (vorzugsweise 28VDC Elektromotor) ausgestattet werden, um die Verfügbarkeit signifikant zu erhöhen.

Die Regelung der Betätigung kann mittels einfacher hydraulischer Ventile erfolgen.

Die Ansteuerung des Betätigungsmechanismus kann mit der Steuerung eines Stellantriebs für eine Steuerfläche kombiniert werden.

Der Betätigungsmechanismus kann mit einfachen Mitteln auch zu einem "Inflight" Klappmechanismus geupgradet werden. In diesem Fall ist es jedoch von Vorteil, wenn die Wing Down Stellung nicht durch "Übercenterung" gehalten wird, so dass äußere Kräfte, welche von Luftlas-ten auf den schwenkbaren Flügelteil herrühren, in der Lage sind den Aktuator passiv zu bewegen.

Es handelt sich somit insgesamt um einen sehr einfachen, aus bewährten Komponenten aufgebauten Der Betätigungsmechanismus, welcher betriebssicher, wartungsarm und auch kostengünstig ist.

Folgende weitere Merkmale/ Varianten sind ebenfalls denkbar.

Die Betätigung des Betätigungsmechanismus kann über zwei oder mehr parallel geschaltete Aktuatoren erfolgen. Aus Redundanzgründen kann es sinnvoll sein, die Kinematik mit einem doppeltem Lastpfad auszuführen.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können.

Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden, die Offenbarung ist also nicht auf explizit genannte Merkmalskombinationen beschränkt.

Weitere Einzelheiten und Vorteile der Erfindung werden anhand der in der Zeichnung dargestellten Ausführungsbeispiele näher erläutert. Hierbei bezeichnen gleiche Bezugszeichen gleiche oder ähnliche Bauteile.

### Es zeigt:

- Figur 1:: eine Schemazeichnung einer erfindungsgemäßen Vorrichtung gemäß einer beispielhaften Ausführungsform.

Fig. 1 zeigt einen Flügel mit einem festen Teil 1 und einem beweglichen, klappbaren Teil. Der bewegliche Teil 1 ist in Fig. 1 in drei Positionen dargestellt: einer ausgeklappten Position 2a ("Flügel unten" bzw. "Wing down"), einer halb hochgeklappten Position 2b und einer hochgeklappten Position 2c ("Flügel oben" bzw. "Wing up").

Der Betätigungsmechanismus für den klappbaren Flügel in Fig. 1 weist einen Drehantrieb GRA auf, mit einem Hebel 3, der um einen Drehpunkt 4 des Drehantriebs GRA rotierbar gelagert ist.

Der Hebel 3 des Drehantriebs GRA ist über einen Zwischenhebel 5 mit dem beweglichen Teil des Flügels verbunden. Der bewegliche Teil des Flügels ist um einen Drehpunkt 6 rotierbar gelagert.

Um den beweglichen Teil des Flügels hochzuklappen wird, wie in Fig. 1 gezeigt, der Hebel 3 des Drehantriebs nach rechts verschwenkt und in die in Fig. 1 strichlierte Position überführt.

Hierdurch wird auch der Zwischenhebel 5 nach rechts bewegt und der bewegliche Teil des Flügels rotiert um den Drehpunkt 6, sodass sich der bewegliche teil des Flügels aus der Position 2a, über die Position 2b in die Position 2c bewegt.

## Patentansprüche

1. Vorrichtung zur Betätigung eines klappbaren Flügels, mit:
- einem Drehantrieb, welcher ortsfest in einem festen Teil des Flügels angebracht ist und mit einem Ausgangshebel gekoppelt ist,
- einem Zwischenhebel, welcher zum einen drehbar mit dem Ausgangshebel des Drehantriebs und zum anderen drehbar mit einem beweglichen Teil des Flügels verbunden ist, und
- einer drehbaren Verbindung zwischen dem festen und beweglichen Teil des Flügels, wobei
- der Drehantrieb einen größeren Drehwinkel aufweist als der Flügel selbst.

2. Vorrichtung gemäß Anspruch 1, **dadurch gekennzeichnet, dass** wenn sich der Flügel in einer hochgeklappten Position befindet, sich der Ausgangshebel des Drehantriebs und der Zwischenhebel in einer Linie befinden, sodass der Flügel passiv in der hochgeklappten Position gehalten wird.

3. Vorrichtung gemäß Anspruch 1 oder 2, **dadurch gekennzeichnet, dass** wenn sich der Flügel in einer ausgeklappten Position befindet, sich der Ausgangshebel des Drehantriebs und der Zwischenhebel in einer parallelen Anordnung zueinander befinden, sodass der Flügel passiv in der ausgeklappten Position gehalten wird.

4. Vorrichtung gemäß einem der vorhergehenden Ansprüche, mit weiterhin einem Verriegelungsmechanismus, der dazu ausgelegt ist, den Flügel in der ausgeklappten Position zu arretieren, wobei der Verriegelungsmechanismus vorzugsweise an einem Verbindungspunkt des Zwischenhebels mit dem Ausgangshebel des Drehantriebs angreift.

5. Vorrichtung gemäß Anspruch 4, **dadurch gekennzeichnet, dass** der Verriegelungsmechanismus als Bremse am Drehantrieb und / oder an einer Drehachse des Drehantriebs angebracht ist.

6. Vorrichtung gemäß einem der vorhergehenden Ansprüche, **dadurch gekennzeichnet, dass** der Drehantrieb als Getriebe ausgeführt ist, wobei vorzugsweise vorgesehen ist, dass das Getriebe als Wolfram Getriebe ausgeführt ist.

7. Vorrichtung gemäß Anspruch 6, **dadurch gekennzeichnet, dass** das Getriebe durch einen Hydraulikmotor und/oder durch einen Elektrokomotor antreibbar oder angetrieben ist .

8. Vorrichtung gemäß Anspruch 7, **dadurch gekennzeichnet, dass** der Hydraulikmotor von einem benachbart angeordneten Elektro-Hydraulischen Aktuator versorgt und / angesteuert wird.

9. Vorrichtung gemäß Anspruch 7 oder 8, **dadurch gekennzeichnet, dass** der Elektromotor von einer Elektronik angesteuert wird, welche dazu ausgelegt ist, im Flug zusätzlich eine andere Aufgabe, vorzugsweise eine Aufgabe bei der Steuerung des Luftfahrzeugs, zu erfüllen.

10. Vorrichtung gemäß einem der vorhergehenden Ansprüche, mit weiterhin einer Steuereinheit, welche dazu ausgelegt ist, in einer ausgeklappten Position des Flügels, einen Antrieb des Drehantriebs im Flug dazu anzusteuern, im Fall von Böen oder anderen Störungen einen beweglichen Teil des Flügels freizugeben und / oder aktiv abzuklappen, um die Auswirkung der Störung zu minimieren, wobei vorzugsweise vorgesehen ist, dass die Kinematik bei einer ausgeklappten Position des Flügels nicht überzentriert ist.

11. Vorrichtung gemäß einem der vorhergehenden Ansprüche, **dadurch gekennzeichnet, dass** der Drehantrieb einen redundanten Antrieb aufweist.

12. Vorrichtung gemäß einem der vorhergehenden Ansprüche, **dadurch gekennzeichnet, dass** der Drehantrieb neben einem Hauptantrieb einen vorzugsweise separaten Notantrieb besitzt, welcher vorzugsweise dazu ausgelegt ist, im Fehlerfall den Drehantrieb mit reduzierter Geschwindigkeit zu betreiben.

13. Vorrichtung gemäß Anspruch 12, **dadurch gekennzeichnet, dass** der Notantrieb ein elektrischer Antrieb mit 28VDC-Versorgung ist.

14. Luftfahrzeug, vorzugsweise Flugzeug oder Helikopter, mit mindestens einer Vorrichtung gemäß einem der Ansprüche 1 bis 13.

15. Verwendung einer Vorrichtung gemäß einem der 1 bis 13 zur Fertigung und / oder Steuerung eines Luftfahrzeugs, vorzugsweise eines Flugzeugs oder Helikopters.
